# EUROPÄISCHE PATENTANMELDUNG

(11) **EP 2 154 700 A1**
(43) Veröffentlichungstag der Anmeldung: **17.02.2010**
(21) Anmeldenummer: 08162351.4
(22) Anmeldetag: 14.08.2008
(51) Int. Cl.: H01H 33/42, H01B 17/34, H01B 17/44, H02G 5/10, H01H 9/52, H01H 33/24

(54) **Hochspannungsisolator mit Feldsteuerelement**

(71) Anmelder: ABB Technology AG, 8050 Zürich (CH)
(72) Erfinder: Widmer, Bruno, CH-8645, Jona (CH); Mauroux, Jean-Claude, CH-5502, Hunzenschwil (CH); Conry, Michael, CH-8003, Zürich (CH); Lakner, Martin, CH-5412, Gebenstorf (CH)
(74) Vertreter: Ingold, Mathias

(57) **Zusammenfassung**

Der Hochspannungsisolator(1) weist ein erstes elektrischen Anschlussstück (2a) und ein zweites elektrisches Anschlussstück (2b) auf, zwischen welchen sich ein elektrischer Isolierkörper (3) erstreckt. Die Endabschnitte (4a, 4b) der Anschlusstücken (2a, 2b) sind mit dem Isolierkörper (3) verbunden, wobei zumindest an einem der Endabschnitte (4a, 4b) ein torusförmig ausgebildetes Feldsteuerelement (5) angeordnet ist. An dem das Feldsteuerelement (5) aufweisenden Endabschnitt (4a, 4b) ist ein sich in Umlaufrichtung des Endabschnittes (4a, 4b) erstreckenden Schlitz (6) eingebracht. Feldsteurelement (5, 5a) und der jeweilig zugehörige Endabschnitt (4a, 4b) sind einstückig ausgebildet. Mit dem Vorsehen des Schlitzes (6) werden bei Längs- und Querkontraktionen des Isolierkörpers (2) auftretende Zug- und Druckkräfte welche senkrecht zur Längsachse des Endabschnittes (4a, 4b) wirken, wie auch Scherkräfte weitgehend vermieden und eine gleichzeitige Beibehaltung einer hohen Vergleichmässigung im Bereich der Isolierstrecke bei im Betriebsfall auftretenden elektrischen Feldern erreicht.

## Beschreibung

### Technisches Gebiet

Die vorliegende Erfindung bezieht sich auf das Gebiet der Hochspannungstechnik, insbesondere auf Hochspannungsisolatoren nach dem Oberbegriff von Patentanspruch 1. Sie bezieht sich weiterhin auf ein Kühlelement und einen Hochleistungsschalter mit derartigem Hochspannungsisolator gemäss dem Oberbegriff der Patentansprüche 5 und 10.

### Stand der Technik

Ein Hochspannungsisolator der eingangs genannten Art ist beispielsweise aus EP 1 933 347 A1 bekannt. Dieser rohrförmig ausgebildete Hochspannungsisolator besitzt ein Epoxyisolierhohlrohr, welches an seinen beiden Enden in ringförmige Halterungen aus Metall eingeklebt ist. Das Ende der dem Isolierkörper zugewandeten Metallhalterung ist in Form eines Torus ausgebildet und dient der Homogenisierung der während des Betriebes wirkenden elektrischen Felder. Der Torus selbst kann Schlitze aufweisen die in axialer und gleichzeitig radialer Richtung des Torus verlaufen, so dass der Torus in ringförmig angeordnete Segmente unterteilt wird, um dadurch seine Steifigkeit des Torus herabzusetzen.

EP 1 657 731 A1 zeigt einen als Generatorschalter ausgebildeten Hochspannungsschalter mit einem Kühlelement, bei dem sich das Kühlelement zwischen dem stromführenden Innenleiter und der Kapslung des Schalters erstreckt. Zur elektrischen Isolierung zwischen Kühlelementverdampfer an dem Hochspannungsschaltergehäuse und Kühlelementkondensator an dem auf Hochspannung liegenden Innenleiter ist zwischen Verdampfer und Kondensator ein Isolierrohr aus Glas vorgesehen. Rohrförmige Verbindungsstücke beidseitig des Isolierrohrs verbinden das Isolierrohr mit Verdampfer und Kondensator. Das Isolierrohr zusammen mit Verdampfer und Kondensator bildet ein Kühlelement.

### Darstellung der Erfindung

Es ist deshalb Aufgabe der Erfindung, einen Hochspannungsisolator der eingangs genannten Art zu schaffen, welcher sowohl thermischen und mechanischen Beanspruchen widersteht, als auch eine hohe elektrische Feldvergleichmässigung gewährleistet. Zudem ist es Aufgabe der Erfindung ein Wärmerohr und eine Hochspannungsleistungsschalter mit einem eingangs genannten Hochspannungsisolator zu schaffen, welche eine höhere Zuverlässigkeit und eine grosse Lebensdauer gewähren.

Diese Aufgabe löst eine Vorrichtung mit den Merkmalen der unabhängigen Patentansprüche.

Der erfindungsgemässe Hochspannungsisolator weist zwei elektrische Anschlussstücke und einen elektrischen Isolierkörper zur Ausbildung einer elektrischen Isolierstrecke zwischen den beiden Anschlussstücken auf. Der Isolierkörper erstreckt sich zwischen beiden Anschlussstücken und verbindet die Anschlusstücke im Bereich ihrer Endabschnitte physisch miteinander. An wenigstens einem der ringförmigen Endabschnitte ist ein ringförmig ausgebildetes elektrisches Feldsteuerelement angeordnet und zwischen dem Endabschnitt und dem Feldsteuerelement, welche einstückig ausgebildet sind, ist mindestens ein Schlitz vorhanden. Somit wird also wenigstens eines der Anschlussstücke aus einem Endabschnitt und einem Feldsteuerelement gebildet und weist einen derartigen Schlitz entlang seines Umfanges auf. Bei Einsatz des Hochspannungsisolators in einem elektrischen Apparat oder einer elektrischen Anlage infolge eines inhomogenen elektrischen Feldes auftretende elektrische Überschläge werden durch das Feldsteuerelement vermieden. Gleichzeitig leitet wegen der elastischen Verformbarkeit des Endabschnittes eine infolge von Temperaturänderungen auftretenden Querkontraktionen des Isolierkörpers keine starken mechanischen Kräfte in den Bereich des Endabschnittes ein. Der umlaufende Schlitz bewirkt somit eine mechanische Entkopplung zwischen dem Feldsteuerelement und dem Endabschnitt ohne die Funktion des Feldsteuerelements als solches zu beeinträchtigen. Durch die Ausbildung einer oder mehrer solcher schlitzförmiger Öffnungen ist das Feldsteuerelement mit dem Endabschnitt nur noch an einzelnen Stellen stegartig verbunden, ist quasi auf dem Endabschnitt elektrisch leitend abgestützt. Unter einem Schlitz soll dabei eine längliche Öffnung im Material verstanden werden, was z. B. auch ein Langloch oder eine Aneinanderreihung von Löchern sein kann, wodurch die Form einer länglichen Öffnung gebildet wird.

Weiterhin weist das erfindungsgemässe Wärmerohr einen erfindungsgemässen Hochspannungsisolator auf, wobei ein Anschlussstück des Hochspannungsisolators einen Abschnitt eines Verdampfers bildet und ein zweites Anschlussstück an einen Kondensator koppelt. Unter Wärmerohr ist ein Wärmeüberträger zu verstehen, der unter Nutzung von Verdampfungswärme eines Arbeitsmediums, eine hohe Wärmestromdichte zwischen dem als Verdampfer bezeichneten Abschnitt und dem als Kondensator bezeichneten Abschnitt des Wärmerohrs erlaubt. Das Wärmerohr bildet einen in sich geschlossenen Kreislauf, in dem das Arbeitsmedium zirkulieren kann. Eine starre Verbindung zwischen den verschiedenen Abschnitten wie Verdampfer, Hochspannungsisolator und Kondensator untereinander muss dabei nicht gegeben sein. Vielmehr soll unter einem Wärmerohr der Erfindung auch ein Wärmerohr verstanden werden, welches eine flexibel bewegliche Verbindung zwischen Verdampfer, Kondensator und Hochspannungsisolator z.B. mittels Schlauchstücke oder Faltenbalg aufweist.

Vorteilhaft ist der tangential umlaufende Schlitz zwischen dem Feldsteuerelement und dem Endabschnitt angeordnet. Damit begrenzt der Schlitz den Endabschnitt zum Feldsteuerelement hin. Das auf Grund seiner toroidalen Form versteifend wirkende Feldsteuerelement wird somit von dem Endabschnitt weitgehend entkoppelt. Durch das Vorhandensein mindestens eines Schlitzes wird zwischen dem Feldelement und dem Endabschnitt somit mindestens ein Steg gebildet, mittels welchem das Feldsteuerelement mit dem Endabschnitt elektrisch und mechanisch verbunden ist. Je nach Materialbeschaffenheit und Wandstärke des Endabschnittes kann die Anzahl und Länge und damit die Anzahl der gebildeten Stege variiert werden. Beispielsweise können zwei umlaufende und gleich lange Schlitze vorhanden sein, wodurch zwei sich gegenüberstehende Stege gebildet werden, die das Feldsteuerelement auf dem Endabschnitt abstützen. Es können auch drei umlaufende Schlitze gebildet sein, wodurch drei Stege gebildet werden. Ein symmetrische Anordnung der Schlitze, erweist sich als vorteilhaft, um eine gleichmässige Abstützung des Feldsteuerelementes auf dem Endabschnitt zu erreichen.

Weitere bevorzugte Ausführungsformen und vorteilhafte Wirkungen gehen aus den abhängigen Patentansprüchen und den Figuren hervor.

### Kurze Beschreibung der Zeichnungen

Im Folgenden wird der Erfindungsgegenstand anhand von bevorzugten Ausführungsbeispielen, welche in den beiliegenden Zeichnungen dargestellt sind, näher erläutert. Es zeigen schematisch:
- Fig. 1: eine Aufsicht auf einen längs einer Achse teilweise geführten Schnitt durch einen links der Achse gelegten Teil einer ersten Ausführungsform des Hochspannungsisolators nach der Erfindung mit zwei am Isolierkörper befestigten Anschlussstücken;
- Fig. 2: eine Aufsicht einer Ausführungsform eines Hochspannungsschalters, bei welchem eine zweite Ausführungsform des erfindungsgemässen Hochspannungsisolators sich zwischen Innenleiter und Aussenleiter erstreckt.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen oder ähnlichen Bezugszeichen versehen. Für das Verständnis der Erfindung nicht wesentliche Teile sind zum Teil nicht dargestellt. Die beschriebenen Ausführungsbeispiele stehen beispielhaft für den Erfindungsgegenstand und haben keine beschränkende Wirkung.

### Wege zur Ausführung der Erfindung

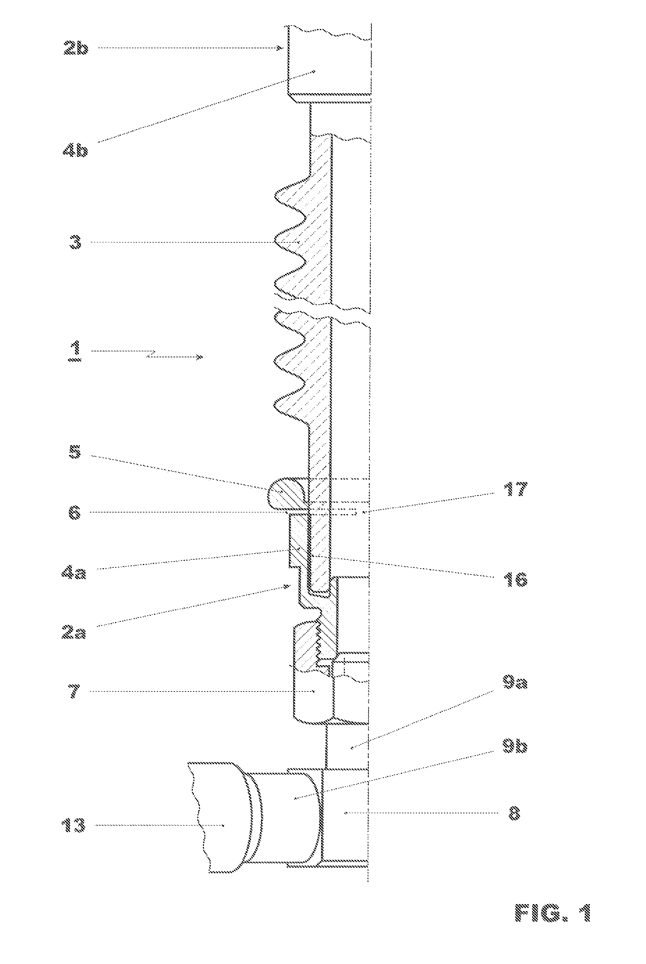

Ein in Fig. 1 dargestellter Hochspannungsisolator 1 weist einen axialsymmetrisch, als Hohlzylinder ausgeführten Isolierkörper 3 auf. Der Isolierkörper 1 besteht im allgemeinen aus einer Keramik (beispielsweise aus Al₂O₃), Glas oder kann aber auch aus einem Epoxy gefertigt sein, welches mit Partikeln wie z.B. silanisiertem Quarzmehl , Wolastonit, Glasfasern gefüllt ist. An den beiden Enden des elektrisch isolierenden Hohlköpers 3 sind jeweils metallische ringförmige Anschlussstücke 2a, 2b, befestigt, die z.B. aus Aluminium oder Stahl gefertigt sind. Das Befestigen der Anschlussstücke 2a, 2b am Isolierkörper 3 kann z. B. dadurch erreicht werden, dass das Ende des Isolierkörpers 3 in das jeweilige Anschlussstück 2a, 2b eingeklebt wird. Der Isolierkörper 3 stellt hierbei eine definierte Isolierstrecke zwischen den beiden Anschlusstücken 2a und 2b sicher. Diese Isolierstrecke muss einer am Schalter dauerhaft anliegenden Nennspannung (typischerweise etwa 10 kV bis 40 kV) und auch einer kurzzeitig am Schalter anliegenden transiente Überspannungen wie Schalt- oder Blitzstossspannung (typischerweise 100 kV oder mehrere 100 kV) standhalten können. Das Anschlussstück 2a kann auf Erdpotential liegen und kann dann mit einem Metallgehäuse elektrisch leitend verbunden sein, wohingegen das Anschlussstück 2b auf Hochspannungspotential liegen kann und dann mit einer Kontaktanordnung eines Hochspannungsschalters verbunden sein kann.

Das Anschlussstück 2a weist an seiner dem Isolierköper 3 abgewandten Seite ein Schraubengewinde auf, mit dem das Anschlussstück 2a an ein rohrförmiges Verbindungsstück 7 angeflanscht werden kann. Auf diese Weise ist ein einfacher Austausch der an das Anschlussstück 2a anzuschliessenden Komponenten realisierbar. Für eine gasdichte Verschraubung können auch zusätzlich zwischen der Verschraubung liegende Dichtungen vorgesehen sein. An dem Verbindungsstück 7, ist ein Winkelstück 8 befestigt, welches zwei in einem Winkel zueinander angeordnete Anschlussstutzen 9a, 9b aufweist. Die beiden Anschlussstutzen 9a, 9b sind durch einen Kanal miteinander verbunden. Am Anschlussstutzen 9b ist ein metallisches Schlauchstück 13 befestigt, welches quer zur Längsachse des Isolierkörpers 3 weggeführt wird. Der Winkel unter der das Schlauchstück 13 weggeführt wird, beträgt vorzugsweise 90°. Das Schlauchstück 13 dient der gasdichten Verbindung und gleichzeitigen mechanischen Entkopplung des Hochspannungsisolators 1 an beispielsweise das Gehäuse eines Hochspannungsschalters. Dazu kann das Schlauchstück 13 beispielsweise als metallischer Faltenbalg oder flexibler Metallschlauch ausgebildet sein. Im Inneren des über das Winkelstück 8, das Verbindungsstück 7 und die Anschlussstücke 2a, 2b mit dem Schlauchstück 13 gas- und druckdicht verbundenen Hochspannungsisolators 1 lassen sich Fluide leiten.

Das Anschlussstück 2a weist an der dem Isolierkörper 3 zugewandten Seite einen Endabschnitt 4a auf, durch welchen das Isolierkörper 3 geführt wird und mit dem der Isolierkörper 3 verklebt ist. Die Klebschichten 16 befinden sich zwischen der Innenwandung des ringförmigen Endabschnittes 4a und dem ringförmigen Abschnitt der Aussenwandung des Isolierkörpers 3, welcher Abschnitt in das Anschlussstück 2a geführt ist. Durch die Klebschichten 16 wird eine gasdichte und Verbindung zwischen Isolierkörper 3 und Anschlussstück 2a erzielt. In gleicher Weise kann auch der Endabschnitt 4b des Anschlussstückes 2b mit dem Isolierkörper 3 gasdicht verbunden werden.

Der ringförmige Endabschnitt 4a des Anschussstückes 2a weist ein Feldsteuerelement 5 auf, das als torusförmiger Ringkörper mit einem Durchmesser ausgeführt ist, welcher grösser ist als der Durchmesser des ringförmigen Endschnittes 4a. Durch das Feldsteuerelement 5 wird der Endabschnitt 4a zum Isolierkörper 3 hin begrenzt. Breite und Durchmesser des torusförmigen Feldsteuerelementes 5 sind derart gewählt, dass das im Betrieb des Hochspannungsisolators 1 wirkende elektrische Feld in der Isolierstrecke derart vergleichmässigt, dass Feldspitzen und damit elektrische Überschläge im Bereich der Islolierstrecke vermieden werden. Die torusförmige Wandung des Feldsteuerelements 5 weist eine durchgängig geschlossene Oberfläche auf, womit gegenüber einer Feldsteuerelektrode, deren Oberfläche Vertiefungen, Löcher oder Schlitze aufweist und wodurch mehrere Teiloberflächen bzw. segmentierte Oberflächen gebildet werden, eine erheblich verbesserte Homogenisierung des wirkenden Feldes erreicht wird.

In den dem Isolierkörper 3 zugewandten Abschnitten der Anschlusstücke 2a, 2b ist die Wandstärke der Anschlusstücke 2a, 2b derart festgesetzt, dass bei einer Längs-und Querkontraktion des Isolierkörpers eine elastische Verformung der Endabschnitte 4a, 4b auftreten kann und dass die Endabschnitte 4a, 4b mit Kräften belastet werden, die gegenüber einer starr ausgebildeten Halterung erheblich reduziert sind. Solche Kräfte sind vor allem senkrecht zur Klebschicht 16 wirkende Zug- und Druckkräfte.

Die Querkontraktion kann bei starken mechanischen Belastungen des Hochspannungsisolators 1 infolge von Schalthandlungen oder aber auch infolge von Biegekräften entstehen, wird jedoch vor allem durch Temperaturänderungen bewirkt, die während des Betriebes auftreten oder die auf die Umgebungstemperatur zurückzuführen sind, welcher der Hochspannungsisolator 1 ausgesetzt ist. Da der Wärmeausdehnungskoeffizient des Isolierkörpers 3 im allgemeinen erheblich grösser ist als derjenige der Endabschnitte 4a, 4b wird bei einer Temperaturerhöhung der Isolierkörper 3 in einem durch starr ausgebildete Endabschnitte 4a, 4b begrenzten Ringraum zusammengepresst, wohingegen sich der Isolierkörper 1 im Bereich der Isolierstrecke, also ausserhalb der Endabschnitte 4a, 4b ungehindert ausdehnen kann. Hierbei entstehende Spannungen im Isolierkörper wirken in den Klebstoffschichten 16 der Endabschnitte 4a, 4b und erzeugen radial gerichtete Kräfte.

Dadurch, dass der Isolierkörper 3 mittels der Adhesivschichten 16 mit den elastisch verformbaren Endabschnitten 4a, 4b verbunden ist, kann sich der Isolierkörper 1 bei der Temperaturerhöhung im Bereich der Endabschnitte 4a, 4b ausdehnen, ohne dass dort unzulässig hohe Spannungen auftreten. Daher werden in den Endabschnitten 4a, 4b hohe lokale Scher- und Zugkräfte und damit ein in den Endabschnitten ansetzendes Schälen oder Spalten der Klebstoffschichten 16 oder ein Reissen des Isolierkörpers 3 vermieden.

Zwischen dem ringförmigen Endabschnitt 4a des Anschlussstückes 2a und dem torusförmigen Feldsteuerelement 5 sind in Umlaufrichtung des Endabschnittes 4a zwei Schlitze 6 ausgebildet, so dass das Feldsteuerelement 5 mittels zweier Stege 17, welche durch die Schlitze 6 gebildet werden, vom Endabschnitt 4a sicher getragen und mit dem Endabschnitt 4a elektrisch leitend verbunden ist. Die Schlitze 6, welche sich beispielsweise durch Fräsen aus dem Endabschnitt 4a erzeugen lassen, sind so ausgebildet, dass beide Stege 17 einander gegenüberliegen und mit dem Durchmesser des Endabschnittes 4a zueinander beanstandet angeordnet sind. Die in Umfangrichtung des Endabschnittes 4a ausgebildeten Schlitze 6 setzen die durch die toroidiale Form des Felsteuerelementes 5 bedingte mechanische Steifigkeit des Anschlussstückes 2a in dem dem Isolierkörper 3 zugewandten Bereich herab und verbessern somit die elastische Verformung dessen. Das so gebildete Feldsteuerelement 5, welches vorzugsweise mit dem Endabschnitt 2a aus einem einzigen Stück beschaffen ist, gewährt nahezu ein elastisches Verhalten des Endabschnittes 4a, welches sonst nur ohne Vorhandensein des Feldsteuerelementes 5 erreicht werden kann. Der Innendurchmesser des Feldsteuerelementes 5 ist in einem Abschnitt gleich dem Innendurchmesser des Endabschnittes 4a.

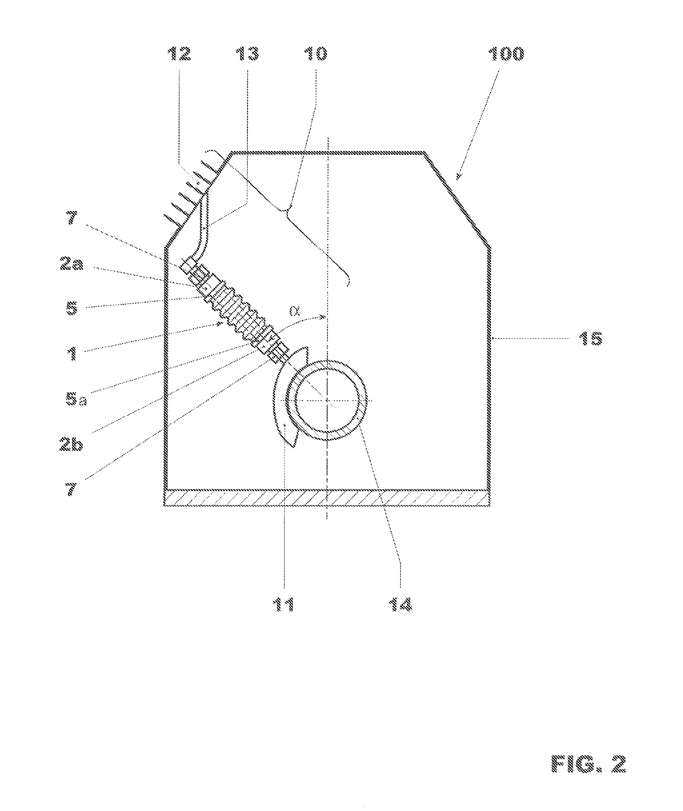

Fig.2 zeigt den Schnitt durch einen Schalterpol 100 eines Generatorschalters. Der Schalterpol 100 weist einen rohrförmigen inneren Stromleiter 14 auf, welcher von einer gehäuseartigen Kapselung 15 umgeben ist, die als Aussenleiter wirkt. Im Betriebsfalle liegt zwischen dem Innenleiter und dem jeweiligen Aussenleiter eine Hochspannung HV an, wobei der Aussenleiter auf Erdpotential G liegt. Am Innenleiter, der im allgemeinen einen kleineren Querschnitt als der Aussenleiter aufweist, entsteht die abzuführende Verlustwärme, während der der Umgebungsluft ausgesetzte Aussenleiter sich relativ wenig erwärmt.

Zur Abführung der Verlustwärme vom Stromleiter 14 wird der Stromleiter 14 mit wenigstens einem Kühlelement gekühlt, welches als Wärmerohr 10 ausgeführt ist. Das Wärmerohr 10 enthält ein Arbeitsmedium, das in einem als Verdampfer 11 bezeichneten Abschnitt des Wärmerohres 10 verdampft wird und in einem als Kondensator 12 bezeichneten Abschnitt des Wärmerohres 10 kondensiert wird. Der Kondensator 12 weist eine Kühlrippenkonstruktion an der Aussenseite der Kapselung 15 auf und ist elektrisch leitend mit der Kapselung 15 verbunden. Über die Kapselung 15 sowie das Schlauchstück 13 wird das Anschlussstück 2a auf Erdpotential gehalten und ragt fingerförmig in Richtung des Stromleiters 14. Damit befindet sich das Anschlussstück 2a exponiert im elektrischen Feldbereich des Stromleiters 14. Im Bereich der Isolierstrecke oder an der Klebschicht 16, welche die Verbindungsstelle zwischen elektrischem Isolierkörper 3 und metallischem Endabschnitt 4a ist, kann es daher zur Ausbildung unerwünschter elektrischer Feldspitzen und damit zu elektrischen Überschlägen kommen. Ein Vermeidung dieser Überschläge und eine Homogenisierung des elektrischen Feldes wird mit einem Hochspannungsisolator 1 wie er in Figur 1 und mit einer weiteren Ausführungsform wie sie Figur 2 gezeigt ist, erreicht. In Figur 2 sind der Kondensator 12 und der Verdampfer 11 über den Hochspannungsisolator 1 miteinander verbunden.

Im eingebauten Zustand des Wärmerohres 10 ist die Längsachse des Hochspannungsisolators 1 zur senkrechten Achse des Schalterpol 100 um einen Winkel α gekippt. Durch die Queranordnung des Schlauchstücks 13 gegenüber der Längsachse des Hochspannungsisolators 1 wird nun eine Verbesserung der Schwerkraftwirkung des Wärmerohres 10 erreicht, indem der Rückfluss des kondensierten Arbeitsmedium im Bereich des Schlauchstückes 13 erleichtert wird.

Nach Figur 2 weist der Hochspannungsisolator 1 in fertigungs- und montage vorteilhafter Form an jedem seiner beiden Enden ein mit einem Schraubengewinde versehenes Anschlussstück 2a und 2b auf. Zudem wird jedes der beiden Endabschnitte 4a, 4b in Richtung des Isolierkörpers 3 durch ein Feldsteuerelement 5 begrenzt, welches mittels den Schlitzen 6 gebildeten Stegen 17 mit dem jeweiligen Endabschnitt 4a und 4b verbunden ist. Durch diesen Aufbau wird auch eine leichte Austauschbarkeit des Hochspannungsisolators 1 gewährleistet.

### Bezugszeichenliste

- 1: Hochspannungsisolator
- 2a, 2b: Anschlussstück
- 3: Isolierkörper
- 4a, 4b: Endabschnitt
- 5, 5a: Feldsteuerelement
- 6: Schlitz, schlitzförmige Öffnung
- 7: Verbindungsstück
- 8: Winkelstück
- 9a, 9b: Anschlussstutzen
- 10: Wärmerohr, Kühlelement
- 11: Verdampfer
- 12: Kondensator
- 13: Schlauchstück
- 14: Stromleiter
- 15: Kapselung
- 16: Adhesivschichten, Klebstoffschichten, Klebschichten
- 17: Steg
- 100: Schalterpol

## Patentansprüche

1. Hochspannungsisolator (1) mit einem ersten elektrischen Anschlussstück (2a) und mit einem zweiten elektrischen Anschlussstück (2b) und mit einem elektrischen Isolierkörper (3), welcher sich zwischen dem ersten Anschlussstück (2a) und dem zweiten Anschlussstück (2b) erstreckt und welcher Isolierkörper (3) mit einem Endabschnitt (4a) des ersten Anschlussstückes (2a) und mit einem Endabschnitt (4b) des zweiten Anschlussstückes (2b) verbunden ist, wobei zumindest an einem Endabschnitt (4a, 4b) ein ringförmig ausgebildetes Feldsteuerelement (5) angeordnet ist, **dadurch gekennzeichnet, dass** dieser Endabschnitt (4a, 4b) und das Feldsteuerelement (5) einstückig ausgebildet sind und zwischen dem Endabschnitt (4a, 4b) und dem Feldsteuerelement (5) mindestens ein Schlitz (6) vorhanden ist.

2. Hochspannungsisolator (1) gemäss Anspruch 1, **dadurch gekennzeichnet, dass** der mindestens eine Schlitz (6) sich in Umlaufrichtung des Endabschnittes (4a, 4b) erstreckt.

3. Hochspannungsisolator (1) gemäss Anspruch 1 oder 2, **dadurch gekennzeichnet, dass** der mindestens eine Schlitz (6) den dem Feldsteuerelement (5) zugewandten Endabschnitt (4a, 4b) begrenzt.

4. Hochspannungsisolator (1) gemäss einem der Ansprüche 1 bis 3, **dadurch gekennzeichnet, dass** durch den mindestens einen Schlitz (6) mindestens ein Steg (17) ausgebildet wird, durch welchen die Feldsteuerelektrode (5) und der Endabschnitt (4a, 4b) miteinander verbunden sind.

5. Hochspannungsisolator (1) gemäss Anspruch 6, **dadurch gekennzeichnet, dass** durch den Schlitz (6) eine mechanische Versteifung des Endabschnittes (4a, 4b) in radialer Richtung welche durch das ringförmige Feldsteuerelement (5) verursacht wird, weitgehend vermieden wird.

6. Hochspannungsisolator (1) gemäss einem der vorherigen Ansprüche, **dadurch gekennzeichnet, dass** die Endabschnitte (4a, 4b) ringförmig und die ringförmige Feldsteuerelektrode (5) toroidal ausgebildet sind.

7. Hochspannungsisolator (1) gemäss einem der vorherigen Ansprüche, **dadurch gekennzeichnet, dass** die Endabschnitte (4a, 4b) mit einer Klebstoffschicht (16) am Isolierkörper (3) festgesetzt sind, welche Klebstoffschicht zwischen einer Innenwandung der Endabschnitte (4a, 4b) und einem Abschnitt der Aussenwandung des Isolierkörpers (3) angeordnet ist.

8. Wärmerohr (10) mit einem Kondensator (12), einem Verdampfer (11) und einem Hochspannungsisolator (1), welcher eine elektrische Isolierstrecke zwischen dem Verdampfer (11) und dem Kondensator (12) ausbildet und welcher ein erstes elektrisches Anschlussstück (2a), ein zweites elektrisches Anschlussstück (2b) und einen elektrischen Isolierkörper (3) aufweist, wobei der Isolierkörper (3) sich zwischen dem ersten Anschlussstück (2a) und dem zweiten Anschlussstück (2b) erstreckt und mit einem Endabschnitt (4a) des ersten Anschlussstückes (2a) und mit einem Endabschnitt (4b) des zweiten Anschlussstückes (2b) verbunden ist und wobei zumindest an einem Endabschnitt (4a, 4b) ein Feldsteuerelement (5) angeordnet ist, **dadurch gekennzeichnet, dass** die Verbindung zwischen dem Endabschnitt (4a, 4b) und dem Feldsteuerelement (5) mindestens einen Schlitz (6) aufweist.

9. Wärmerohr (10) gemäss Anspruch 8, **dadurch gekennzeichnet, dass** das erste Anschlussstück (2a) einen Abschnitt des Verdampfers (11) bildet und das zweite Anschlussstück (2) des Hochspannungsisolators (1) an einen Kondensator (12) koppelt.

10. Wärmerohr (10) gemäss Anspruch 9, **dadurch gekennzeichnet, dass** das Anschlussstück (2a) mit dem Verdampfer (11) über ein flexibles Schlauchstück (13) verbunden ist.

11. Wärmerohr (10) gemäss Anspruch 10, **dadurch gekennzeichnet, dass** das mindestens das erste Anschlussstück (2a) einen Anschlussflansch (7) zum lösbaren Befestigen des Schlauchstückes (13) aufweist.

12. Wärmerohr (10) gemäss Anspruch 10 oder 11, **dadurch gekennzeichnet, dass** das Schlauchstück (13) quer zur Längsachse des Isolierkörpers (3) geführt wird.

13. Wärmerohr(10) gemäss einem der Ansprüche 8 bis 12, **dadurch gekennzeichnet, dass** sowohl das erste Anschlussstück (2a) mit dem Feldsteuerelement (5) einstückig als auch das zweite Anschlussstück (2b) mit einem weiteren Feldsteuerelement (5a) einstückig ausgebildet sind und beide Anschlussstücke (2a, 2b) den Schlitz (6) aufweisen.

14. Generatorschalter (100) mit dem Wärmerohr (10) gemäss einem der Ansprüche 8 bis 13, bei dem der Verdampfer (11) thermisch und elektrisch mit einem Stromleiter (14) und beim dem der Kondensator (12) thermisch und elektrisch mit einer den Stromleiter (14) einschliessenden Kapselung (15) gekoppelt ist.

15. Generatorschalter (100) gemäss Anspruch 14, **dadurch gekennzeichnet, dass** das erste Anschlussstück (2a) aus der auf Erdpotential befindlichen Kapselung (15) fingerförmig herausragt.
